# EUROPEAN PATENT APPLICATION

(11) **EP 4 518 549 A1**
(43) Date of publication of application: **05.03.2025**
(21) Application number: 22939102.4
(22) Date of filing: 28.04.2022
(51) Int. Cl.: H04W 74/08

(54) **MESSAGE SENDING METHOD AND APPARATUS, MESSAGE RECEPTION METHOD AND APPARATUS, DEVICE AND STORAGE MEDIUM**

(71) Applicant: Beijing Xiaomi Mobile Software Co., Ltd., Beijing 100085 (CN)
(72) Inventor: MU, Qin, Beijing 100085 (CN)
(74) Representative: Dehns Germany Partnerschaft mbB
(86) International application number: PCT/CN2022/089941
(87) International publication number: WO 2023/206250

(57) **Abstract**

The present disclosure belongs to the field of communications. Disclosed are a message sending method and apparatus, a message reception method and apparatus, a device and a storage medium. The method comprises: sending to a network device a message 3 in a random access process, the message 3 carrying type information used for indicating a terminal of a first type, the type information of the terminal of a first type being different from type information of a terminal of a second type and type information of a terminal of a third type, and the terminal capability of the terminal of a second type and the terminal capability of the terminal of a third type being both greater than the terminal capability of the terminal of a first type. The method is used for supporting reporting of a terminal type by the terminal of a first type.

## Description

### TECHNICAL FIELD

The present disclosure relates to the field of communications, and in particular to a message sending method, a message receiving method, an apparatus, a device, and a storage medium.

### BACKGROUND

In the Long Term Evolution (LTE) system, in order to support IoT services, two major technologies, Machine-Type Communication (MTC) and Narrow Band-Internet of Things (NB-IoT), are proposed. These two technologies are mainly aimed at low-rate, high-latency application scenarios, such as meter reading, environmental monitoring, etc.

The above-mentioned NB-IoT technology supports a maximum rate of several hundred kB, and the above-mentioned MTC technology supports a maximum rate of several MB. With the development of IoT services, some services have emerged, such as smart homes, wearable devices, and industrial sensor measurement services. These services usually require a rate of tens to 100 MB, and the above-mentioned NB-IoT and MTC technologies can no longer meet the needs of these services.

Therefore, a new user equipment (UE) is proposed in the 5G New Radio (NR) to cover the needs of IoT devices that support these services. The terminal type of the Reduced Capability UE (RedCap UE) was introduced in the R17 of the Third Generation Partnership Project (3GPP), and an early indication mechanism was introduced for RedCap UE. This mechanism is a mechanism for reporting the terminal type and terminal capability during the random access process.

### SUMMARY

The embodiments of the present disclosure provide a message sending method, a message receiving method, an apparatus, a device and a storage medium. The technical solution is as follows:
According to an aspect of the embodiments of the present disclosure, there is provided a message sending method, performed by a first type terminal, including:
sending a message 3 in a random access process to a network device, the message 3 carrying type information for indicating the first type terminal,
where the type information of the first type terminal is different from type information of a second type terminal and type information of a third type terminal, and a terminal capability of the second type terminal and a terminal capability of the third type terminal are both greater than a terminal capability of the first type terminal.

According to another aspect of the embodiments of the present disclosure, there is provided a message receiving method, performed by a network device, including:
receiving a message 3 in a random access process sent by a terminal;
determining that the terminal is a first type terminal based on type information of the first type terminal carried in the message 3;
wherein the type information of the first type terminal is different from type information of a second type terminal and type information of a third type terminal, and a terminal capability of the second type terminal and a terminal capability of the third type terminal are both greater than a terminal capability of the first type terminal.

According to another aspect of the embodiments of the present disclosure, there is provided a message sending device, including:
a sending module configured to send a message 3 in a random access process to a network device, the message 3 carrying type information for indicating a first type terminal;
where the type information of the first type terminal is different from type information of a second type terminal and type information of a third type terminal, and a terminal capability of the second type terminal and a terminal capability of the third type terminal are both greater than a terminal capability of the first type terminal.

According to another aspect of the embodiments of the present disclosure, there is provided a message receiving device, including:
a second receiving module configured to receive a message 3 in a random access process sent by a terminal;
a second processing module configured to determine that the terminal is a first type terminal based on type information of the first type terminal carried in the message 3;
where the type information of the first type terminal is different from type information of a second type terminal and type information of a third type terminal, and a terminal capability of the second type terminal and a terminal capability of the third type terminal are both greater than a terminal capability of the first type terminal.

According to another aspect of the embodiments of the present disclosure, there is provided a terminal, including:
a processor; and
a transceiver connected to the processor;
where the processor is configured to execute executable instructions to implement the message sending method according to the above-mentioned various aspects.

According to another aspect of the embodiments of the present disclosure, there is provided a network device, including:
a processor; and
a transceiver connected to the processor;
where the processor is configured to execute executable instructions to implement the message receiving method according to the above-mentioned various aspects.

According to another aspect of the embodiments of the present disclosure, there is provided a computer-readable storage medium, where the computer-readable storage medium stores at least one instruction, at least one program, a code set or an instruction set, and the at least one instruction, the at least one program, the code set or the instruction set are loaded and executed by a processor to implement the message sending method according to the above aspects, or the message receiving method according to the above-mentioned various aspects.

According to another aspect of the embodiments of the present disclosure, there is provided a computer program product (or a computer program). The computer program product (or the computer program) includes computer instructions, and the computer instructions are stored in a computer-readable storage medium. The processor of the computer device reads the computer instructions from the computer-readable storage medium, and the processor executes the computer instructions, so that the computer device performs the message sending method or message receiving method according to the above-mentioned various aspects.

According to another aspect of the embodiments of the present disclosure, there is provided a chip. The chip includes programmable logical circuit and/or program instructions. When the chip operates, the message sending method or message receiving method according to the above-mentioned various aspects is implemented.

The technical solution provided by the embodiments of the present disclosure may include the following beneficial effects:
In the above-mentioned message sending method, the first type terminal is a type of terminal with the terminal capability less than the terminal capability of the second type terminal and the terminal capability of the third type terminal. When the first type terminal sends message 3 in the random access process to the network device, the type information of the first type terminal can be carried in message 3, and the type information of the first type terminal is different from the type information of the second type terminal. That is, the type message dedicated to the first type terminal can be used to implement the terminal type reporting of the first type terminal in the random access process. For example, the eRedCap UE can use the type information dedicated to itself to report the terminal type, that is, the method supports the eRedCap UE to report its own terminal type.

It should be understood that the above general description and the detailed description below are only exemplary and explanatory, and cannot limit the present disclosure.

### BRIEF DESCRIPTION OF THE DRAWINGS

In order to more clearly illustrate the technical solutions in the embodiments of the present disclosure, the following will briefly introduce the drawings required for the description of the embodiments. Obviously, the drawings described below are only some embodiments of the present disclosure. For those skilled in the art, other drawings can be obtained based on these drawings without inventive work.
FIG. 1 is a schematic diagram of a communication system according to an embodiment;
FIG. 2 is a flow chart of a message sending method according to an embodiment;
FIG. 3 is a schematic diagram of a structure of a UL MAC PDU according to an embodiment;
FIG. 4 is a schematic diagram of a structure of a MAC subheader according to an embodiment;
FIG. 5 is a schematic diagram of a structure of a MAC subheader according to another embodiment;
FIG. 6 is a flow chart of a message sending method according to another embodiment;
FIG. 7 is a flow chart of a message sending method according to another embodiment;
FIG. 8 is a flow chart of a message sending method according to another embodiment;
FIG. 9 is a flow chart of a message receiving method according to an embodiment;
FIG. 10 is a flow chart of a message receiving method according to another embodiment;
FIG. 11 is a flow chart of a message receiving method according to another embodiment;
FIG. 12 is a flow chart of a message receiving method according to another embodiment;
FIG. 13 is a block diagram of a message sending device according to an embodiment;
FIG. 14 is a block diagram of a message receiving device according to an embodiment;
FIG. 15 is a schematic diagram of a structure of a terminal according to an embodiment;
FIG. 16 is a schematic diagram of a structure of a network device according to an embodiment.

### DETAILED DESCRIPTION

Here, example embodiments will be described in detail, and examples thereof are shown in the accompanying drawings. When the following description refers to the drawings, unless otherwise indicated, the same numbers in different drawings represent the same or similar elements. The embodiments described in the following example embodiments do not represent all embodiments consistent with the present disclosure. Instead, they are only examples of devices and methods consistent with some aspects of the present disclosure as detailed in the attached claims.

In the LTE system, in order to support the Internet of Things services, two major technologies, MTC and NB-IoT, are proposed. These two major technologies are mainly aimed at low-rate, high-latency application scenarios, such as meter reading, environmental monitoring and other scenarios.

The above-mentioned NB-IoT technology supports a maximum rate of several hundred kB, and the above-mentioned MTC technology supports a maximum rate of several MB. With the development of the Internet of Things services, some services have emerged, such as smart homes, wearable devices, and industrial sensor measurement services. These services usually require a rate of tens to 100 MB, and the above-mentioned NB-IoT and MTC technologies can no longer meet the needs of these services.

At present, a new type of user equipment (UE) is proposed in the third generation partnership project (3GPP) to cover the needs of Internet of Things devices supporting these services. The terminal type of Reduced Capability UE (RedCap UE) was introduced in the R17 of 3GPP, and an early indication mechanism was introduced for RedCap UE. This mechanism is a mechanism for reporting the terminal type and terminal capability during the random access process. For example, the terminal indicates the terminal type through Message 1 (Msg. 1), Message A (Msg.A), or Message 3 (Msg.3) during the random access process.

For the 5G New Radio (NR), the terminal type of enhanced Reduced Capability UE (eRedCap UE) was also introduced in R18 of 3GPP. Among them, the eRedCap UE further reduces the terminal bandwidth compared with the RedCap UE. For example, under the random access frequency range 1 (FR1), the terminal bandwidth of the eRedCap UE is reduced from 20 MHz to 5 MHz. In addition, the eRedCap UE further reduces the terminal data processing time and peak rate compared with the RedCap UE. Therefore, the early indication mechanism of the RedCap UE is not applicable to the eRedCap UE. Therefore, in order to solve the technical problem of reporting the terminal type of the eRedCap UE, the present disclosure provides a message sending method and a message receiving method, as shown in the following embodiments.

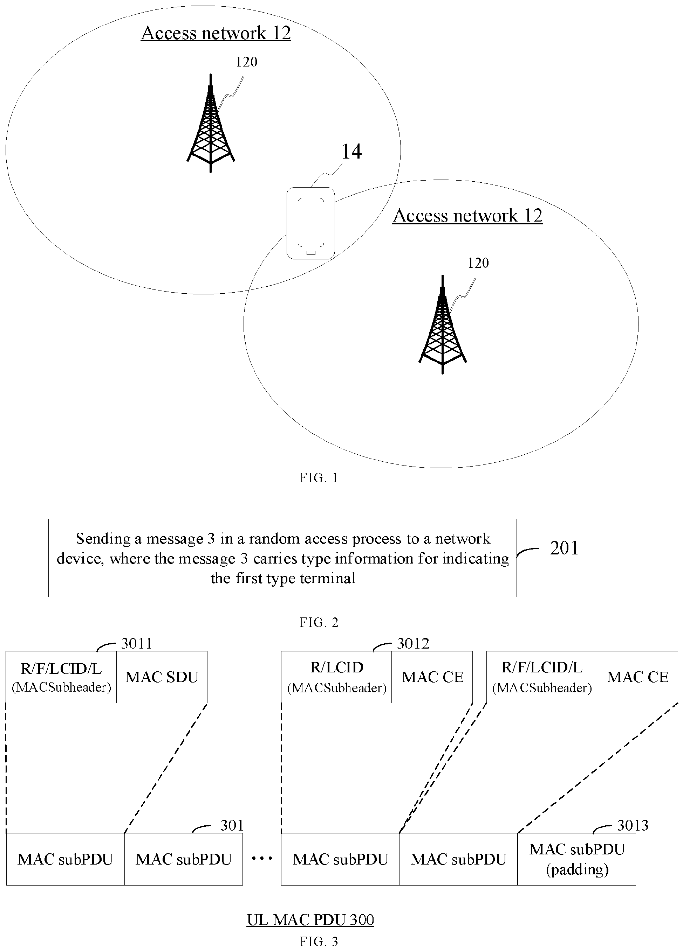

FIG. 1 shows a block diagram of a communication system provided by an embodiment of the present disclosure, and the communication system may include an access network 12 and a user terminal 14.

The access network 12 includes several network devices 120. The network device (also called access network device) 120 may be a base station, which is a device deployed in the access network to provide wireless communication functions for the user terminal (abbreviated as "terminal") 14. The base station may include various forms of macro base stations, micro base stations, relay stations, access points, etc. In systems using different wireless access technologies, the names of devices with base station functions may be different. For example, in LTE systems, they are called eNodeB or eNB; in 5G NR systems, they are called gNodeB or gNB. With the evolution of communication technology, the description of "base station" may change. For the convenience of description in the embodiments of the present disclosure, the above-mentioned devices that provide wireless communication functions for user terminals 14 are collectively referred to as network devices.

The user terminal 14 may include various handheld devices, vehicle-mounted devices, wearable devices, computing devices or other processing devices connected to a wireless modem with wireless communication functions, as well as various forms of user equipment, mobile stations (MS), terminal devices, etc. For the convenience of description, the above-mentioned devices are collectively referred to as user terminals. The network device 120 and the user terminal 14 communicate with each other through a certain air interface technology, such as a Uu interface.

For example, there are two communication scenarios between the network device 120 and the user terminal 14: uplink communication scenario and downlink communication scenario. Among them, the uplink communication refers to sending signals to the network device 120; and the downlink communication refers to sending signals to the user terminal 14.

For example, the user terminal 14 reports its terminal type to the network device 120 during the random access process. The user terminal 14 may be a first type terminal, a second type terminal, or a third type terminal. The first type terminal, the second type terminal, and the third type terminal are three types of terminals corresponding to different terminal capabilities.

The technical solutions of the embodiments of the present disclosure can be applied to various communication systems, such as: Global System of Mobile Communication (GSM), Code Division Multiple Access (CDMA) system, Wideband Code Division Multiple Access (WCDMA) system, General Packet Radio Service (GPRS), Long Term Evolution (LTE) system, LTE Frequency Division Duplex (FDD) system, LTE Time Division Duplex (TDD) system, Advanced Long Term Evolution (LTE-A) system, New Radio (NR) system, evolution system of NR system, LTE-based access to Unlicensed spectrum (LTE-U) system, NR-U system, Universal Mobile Telecommunication System (UMTS), Worldwide Interoperability for Microwave Access (WiMAX) communication system, Wireless Local Area Network (WLAN) system, Wireless Fidelity (WiFi), next generation communication systems or other communication systems, etc.

Generally speaking, the number of connections supported by traditional communication systems is limited and easy to implement. However, with the development of communication technology, mobile communication systems will not only support traditional communications, but also support, for example, device to device (D2D) communication, machine to machine (M2M) communication, machine type communication (MTC), vehicle to vehicle (V2V) communication and vehicle to everything (V2X) system. The embodiments of the present disclosure can also be applied to these communication systems.

FIG. 2 shows a flowchart of a message sending method provided by an embodiment of the present disclosure, which is applied to the communication system shown in FIG. 1 and is performed by a first type terminal. The method includes:
Step 201, sending a message 3 in a random access process to a network device, where the message 3 carries type information for indicating the first type terminal.

The type information of the first type terminal is different from the type information of the second type terminal and the type information of the third type terminal. The terminal capability of the second type terminal and the terminal capability of the third type terminal are both greater than the terminal capability of the first type terminal.

For example, the terminal capability of the second type terminal is less than the terminal capability of the third type terminal.

For example, the terminal capability includes terminal bandwidth (Band Width), and the terminal bandwidth supported by the first type terminal is less than the terminal bandwidth supported by the second type terminal and the terminal bandwidth supported by the third type terminal. The terminal bandwidth of the second type terminal is less than the terminal bandwidth supported by the third type terminal.

In some embodiments, the first type terminal is an eRedCap UE, the second type terminal is a RedCap UE, and the third type terminal is a normal terminal. A normal terminal is a terminal defined in the 5G NR system, which includes other terminals in the 5G NR system except eRedCap UE and RedCap UE.

For example, the terminal capability also includes at least one of the peak rate of the terminal (including uplink peak rate and downlink peak rate), mobility, delay, and supported frequency band.

In some embodiments, the type information of the terminal includes a logical channel identifier (Logical Channel IDentifier, LCID). For example, the type information of the first type terminal includes a first LCID, the type information of the second type terminal includes a second LCID, and the type information of the third type terminal includes a third LCID. The first LCID is different from the second LCID and the third LCID, and the second LCID is also different from the third LCID.

For example, the first LCID is configured to indicate the eRedCap UE, the second LCID is configured to indicate the RedCap UE, and the third LCID is configured to indicate the normal terminal.

Message 3 includes an LCID information field, and the LCID information field is configured to indicate the terminal type. For example, the first LCID, the second LCID, or the third LCID is carried in the LCID information field. When the first type terminal sends message 3, the first LCID is carried in the LCID information field of message 3. For example, the first type terminal maps the first LCID to the LCID information field in message 3 and sends message 3 to the network device.

Message 3 includes a Common Control Channel (CCCH) Service Data Unit (SDU), where the CCCH SDU is included in a Media Access Control (MAC) SDU, each MAC SDU corresponds to a MAC subheader, and the MAC subheader includes an LCID information field.

For example, as shown in FIG. 3, a UL MAC PDU 300 provided by an embodiment is shown, where UL refers to uplink and PDU refers to protocol data unit. A UL MAC PDU 300 is composed of one or more MAC subPDUs 301, where subPDU is a sub-protocol data unit. MAC subPDU 301 includes: MAC subPDU 3011, including a MAC subheader and a MAC SDU; MAC subPDU 3012, including a MAC subheader and a MAC control element (CE); MAC subPDU 3013, including a MAC subheader and a padding. A UL MAC PDU may contain a MAC subPDU 3013, or may not contain a MAC subPDU 3013.

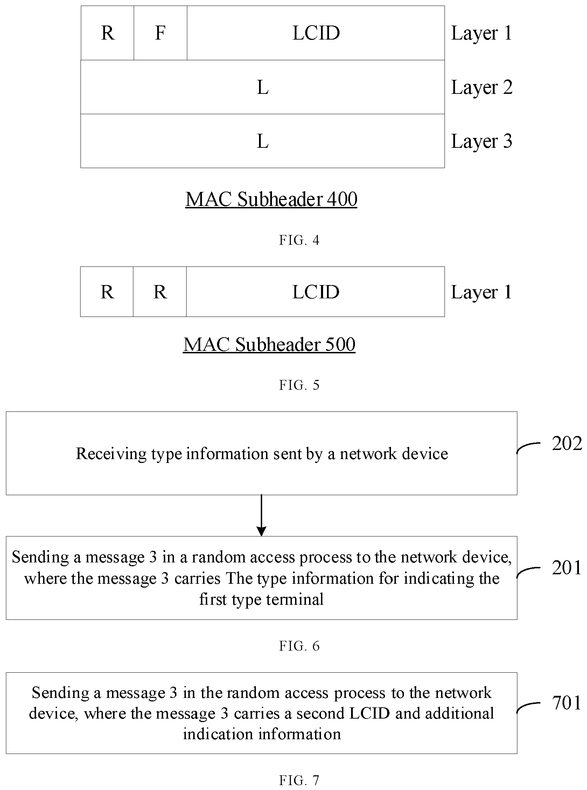

For example, as shown in FIG. 4, a schematic diagram of a structure of a MAC subheader 400 provided by an embodiment is shown, and the MAC subheader 400 includes R/F/LCID/L. As shown in FIG. 5, a schematic diagram of a structure of a MAC subheader 500 provided by another embodiment is shown, and the MAC subheader 500 includes R/LCID. Among them, R is a reserved bit; F is configured to indicate the length of the L field; L is configured to indicate the length of the corresponding MAC SDU or MAC CE in bytes; LCID refers to a logical channel identifier, and LCID is configured to indicate the logical channel instance corresponding to the MAC SDU.

For example, as shown in Table 1, the LCID values in the uplink shared channel (UpLink-Shared Channel, UL-SCH) are reserved values (Reserved), and the index (Index) range of the Reserved is: 33-51, and the binary representation is 100001-110011. For example, the index of the first LCID can be any value from 33 to 51.

**Table 1**

| Index | LCID values |
|---|---|
| 33-51 | Reserved |

In summary, in the message sending method provided in this embodiment, the first type terminal is a type of terminal with the terminal capability less than the terminal capability of the second type terminal and the terminal capability of the third type terminal. When the first type terminal sends message 3 in the random access process to the network device, the type information of the first type terminal can be carried in message 3. The type information of the first type terminal is different from the type information of the second type terminal. That is, the type message dedicated to the first type terminal can be used to implement the terminal type reporting of the first type terminal in the random access process. For example, the eRedCap UE can use the dedicated first LCID to report the terminal type.

In some embodiments, the type information of the terminal is predefined by the protocol. For example, the 3GPP protocol predefines the type information of the first type terminal, the type information of the second type terminal, and the type information of the third type terminal. In some embodiments, the first LCID is the type information of the first type terminal predefined by the protocol; the second LCID is the type information of the second type terminal predefined by the protocol; and the third LCID is the type information of the third type terminal predefined by the protocol.

For example, during the random access process, the first type terminal sends a message 3 carrying a first LCID to the network device; the second type terminal sends a message 3 carrying a second LCID to the network device; and the third type terminal sends a message 3 carrying a third LCID to the network device.

In other embodiments, the type information of the terminal is configured by the network device for the terminal. For example, the first LCID is the type information configured by the network device for the first type terminal. As shown in FIG. 6, before sending message 3, the first type terminal performs step 202 as follows:
Step 202, receiving the type information sent by the network device.

For example, the first type terminal receives the type information of the first type terminal sent by the network device. For example, the eRedCap UE receives the first LCID configured by the network device.

In other embodiments, the second type terminal receives the type information of the second type terminal sent by the network device. For example, the RedCap UE receives the second LCID configured by the network device. The third type terminal receives the type information of the third type terminal sent by the network device. For example, the normal terminal receives the third LCID configured by the network device.

In some embodiments, the above type information is carried in a system message. For example, the first type terminal receives a system message sent by a network device, and the system message carries type information of the first type terminal. For example, the system message carries a first LCID.

For example, the first type terminal may also receive type information sent by the network device before random access. For example, the first type terminal receives a system message sent by the network device before random access, and obtains type information of the first type terminal from the system message.

In summary, in the message sending method provided in this embodiment, the first type terminal can be configured by the network device with type information dedicated to itself, thereby supporting the terminal type reporting of the first type terminal.

There is a situation where the network device does not configure the type information of the first type terminal, then the first type terminal can use the type information shared by the first type terminal and the second type terminal, and report that the terminal is the first type terminal in combination with the additional indication information. For example, as shown in FIG. 7, step 201 in FIG. 2 may include step 701, as shown below:
Step 701, sending a message 3 in the random access process to the network device, where the message 3 carries the second LCID and additional indication information.

The second LCID is an LCID shared by the first type terminal and the second type terminal, and the combination of the additional indication information and the second LCID is configured to indicate the first type terminal; or, the additional indication information is configured to indicate the first type terminal. For example, the combination of the additional indication information and the second LCID is configured to indicate the eRedCap UE; or, the additional indication information is configured to indicate the eRedCap UE. For example, the index of the second LCID is X, the index of the additional indication information is Y, and the combination of the two X+Y is configured to indicate the eRedCap UE.

In some embodiments, the second LCID may be predefined by the protocol; or, the second LCID may be configured by the network device for the first type terminal and the second type terminal.

In some embodiments, the additional indication information may be predefined by the protocol; or, the additional indication information may be configured by the network device for the first type terminal.

In some embodiments, the second LCID is carried in the LCID information field of message 3, and the additional indication information is carried in the information field of message 3 other than the LCID information field. For example, the additional indication information is carried in the MAC CE information field in message 3.

In some embodiments, the information field configured to carry additional indication information in message 3 is predefined by the protocol; or, it is configured by the network device for the first type terminal. For example, the MAC CE information field configured to carry additional indication information in message 3 is predefined by the protocol; or, it is configured by the network device for the first type terminal.

In some embodiments, when the second LCID is carried in message 3 and no additional indication information is carried, the second LCID is configured to indicate the second type terminal. For example, the second LCID is configured to indicate the RedCap UE.

In summary, in the message sending method provided in this embodiment, the first type terminal and the second type terminal share the second LCID, and the first type terminal is indicated by a combination of the second LCID and the additional indication information, or the first type terminal is indicated by the additional indication information, and the terminal type reporting of the first type terminal is supported when the first LCID cannot be used. In addition, in this embodiment, the additional indication information is carried by message 3, and the terminal type reporting by the first type terminal is supported when there is information field of the additional indication information in message 3, without reporting the terminal type through other signaling, which can save signaling overhead.

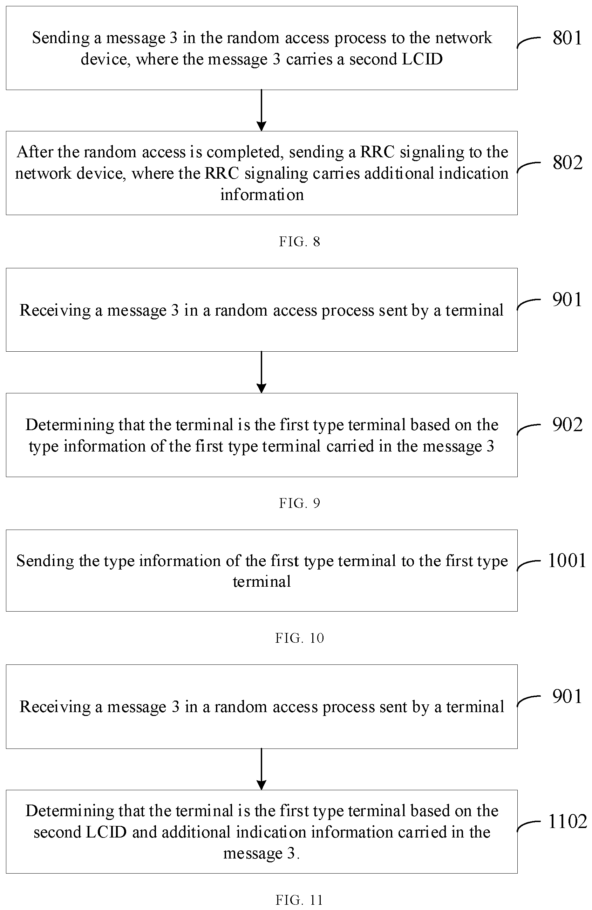

In the embodiment shown in FIG. 7 above, additional indication information is carried in message 3. There is another situation in which there may be no information field carrying additional indication information in message 3. Then step 201 in FIG. 2 may include steps 801 to 802, as shown in FIG. 8, and the steps are as follows:
Step 801, sending a message 3 in the random access process to the network device, where the message 3 carries the second LCID.

The second LCID is an LCID shared by the first type terminal and the second type terminal. In some embodiments, the second LCID may be predefined by the protocol; or, the second LCID may be configured by the network device for the first type terminal and the second type terminal.

In some embodiments, the second LCID is carried in the LCID information field of message 3. For example, as shown in FIGS. 3 to 5, the LCID information field is the information field in the MAC subheader.

The first type terminal maps the second LCID on the LCID information field and sends message 3 carrying the second LCID to the network device.

Step 802, after the random access is completed, sending a Radio Resource Control (RRC) signaling to the network device, where the RRC signaling carries additional indication information.

In some embodiments, the additional indication information may be predefined by the protocol; or, the additional indication information may be configured by the network device for the first type terminal.

In response to the absence of the information field of the additional indication information in message 3, the first type terminal sends RRC signaling to the network device after the random access is completed.

That is, the first type terminal sends message 3 carrying the second LCID when the information field of the additional indication information does not exist in message 3; after the random access is completed, the additional indication information is sent to the network device through RRC signaling.

In some embodiments, the combination of the additional indication information and the second LCID is configured to indicate the first type terminal; or, the additional indication information is configured to indicate the first type terminal. For example, the combination of the additional indication information and the second LCID is configured to indicate the eRedCap UE; or, the additional indication information is configured to indicate the eRedCap UE. For example, the index of the additional indication information is Z, and Z is configured to indicate the eRedCap UE.

In summary, in the message sending method provided in this embodiment, the first type terminal and the second type terminal share the second LCID, the first type terminal is indicated by a combination of the second LCID and additional indication information, or the first type terminal is indicated by additional indication information, and the first type terminal is supported to report the terminal type when the first LCID cannot be used. In this embodiment, RRC signaling is used to send additional indication information, and the first type terminal is supported to report the terminal type when there is no information field of additional indication information in message 3.

FIG. 9 shows a flowchart of a message receiving method provided by an embodiment of the present disclosure, which is applied to the communication system shown in FIG. 1 and is performed by a network device. The method includes:
Step 901, receiving a message 3 in a random access process sent by a terminal.

The message 3 carries the type information of the terminal. For example, message 3 may carry the type information of the first type terminal, or the type information of the second type terminal, or the type information of the third type terminal.

The type information of the first type terminal is different from the type information of the second type terminal and the type information of the third type terminal, and the terminal capability of the second type terminal and the terminal capability of the third type terminal are both greater than the terminal capability of the first type terminal. For example, the terminal capability of the second type terminal is also smaller than the terminal capability of the third type terminal.

For example, the terminal capability includes terminal bandwidth, and the terminal bandwidth supported by the first type terminal is smaller than the terminal bandwidth supported by the second type terminal and the terminal bandwidth supported by the third type terminal. The terminal bandwidth of the second type terminal is also smaller than the terminal bandwidth supported by the third type terminal. For example, the terminal capability also includes at least one of the peak rate, mobility, delay, and supported frequency band of the terminal.

In some embodiments, the first type terminal is an eRedCap UE, the second type terminal is a RedCap UE, and the third type terminal is a normal terminal. A normal terminal is a terminal defined in the 5G NR system, which includes other terminals in the 5G NR system except eRedCap UE and RedCap UE.

In some embodiments, the type information of the terminal includes an LCID. For example, the type information of the first type terminal includes a first LCID, the type information of the second type terminal includes a second LCID, and the type information of the third type terminal includes a third LCID. The first LCID is different from the second LCID and the third LCID, and the second LCID is also different from the third LCID. For example, the first LCID is configured to indicate an eRedCap UE, the second LCID is configured to indicate a RedCap UE, and the third LCID is configured to indicate a normal terminal.

Message 3 includes an LCID information field, and the LCID information field is configured to indicate the terminal type. The first LCID is carried in the LCID information field of message 3, and the network device reads the first LCID in the LCID information field in message 3. In other embodiments, the second LCID is carried in the LCID information field of message 3, and the network device reads the second LCID in the LCID information field in message 3; or, the third LCID is carried in the LCID information field of message 3, and the network device reads the third LCID in the LCID information field in message 3.

Step 902, determining that the terminal is the first type terminal based on the type information of the first type terminal carried in the message 3.

For example, the network device determines that the terminal is the first type terminal based on the first LCID carried in message 3. That is, the network device determines that it receives message 3 of the first type terminal based on the first LCID.

In other embodiments, the second LCID is carried in message 3, and the terminal is determined to be the second type terminal; or the third LCID is carried in message 3, and the terminal is determined to be the third type terminal.

In summary, in the message receiving method provided in this embodiment, the first type terminal is a type of terminal with the terminal capability less than the terminal capability of the second type terminal and the terminal capability of the third type terminal. When the network device receives message 3 sent by the terminal during random access, and message 3 carries type information of the first type terminal, it can be determined that the terminal sending message 3 is the first type terminal, where the type information of the first type terminal is different from the type information of the second type terminal. That is, the type message dedicated to the first type terminal can be used to implement the terminal type reporting of the first type terminal during random access.

In some embodiments, the type information of the terminal is predefined by the protocol. For example, the first LCID is the type information of the first type terminal predefined by the protocol. In other embodiments, the type information of the terminal is configured by the network device for the terminal. As shown in FIG. 10, the network device performs the following steps before receiving message 3:
Step 1001, sending the type information of the first type terminal to the first type terminal.

For example, the network device configures the first LCID for the eRedCap UE. In other embodiments, the network device configures the second LCID for the RedCap UE, and configures the third LCID for the normal terminal.

In some embodiments, the network device sends a system message to the first type terminal, and the system message carries the type information of the first type terminal. For example, the system message carries the first LCID.

For example, the network device sends the type information of the terminal to the terminal before random access. For example, the network device sends the type information of the first type terminal to the first type terminal before random access.

In summary, in the message receiving method provided in this embodiment, the network device configures, for the first type terminal, the type information dedicated to the first type terminal, thereby supporting the terminal type reporting of the first type terminal.

There is a situation where the network device does not configure the type information of the first type terminal, and configures the type information shared by the first type terminal and the second type terminal, and the terminal type is reported in combination with additional indication information. For example, as shown in FIG. 11, step 902 in FIG. 9 may include step 1102, as shown below:
Step 1102, determining that the terminal is the first type terminal based on the second LCID and additional indication information carried by the message 3.

That is, the type information of the first type terminal includes the second LCID and additional indication information. The second LCID is an LCID shared by the first type terminal and the second type terminal. The combination of the additional indication information and the second LCID is configured to indicate the first type terminal; or, the additional indication information is configured to indicate the first type terminal.

In some embodiments, the second LCID may be predefined by the protocol; or, the second LCID may be configured by the network device for the first type terminal and the second type terminal.

In some embodiments, the additional indication information may be predefined by the protocol; or, the additional indication information may be configured by the network device for the first type terminal.

In some embodiments, the second LCID is carried in the LCID information field of message 3, and the additional indication information is carried in the information field of message 3 other than the LCID information field. For example, the additional indication information is carried in the MAC CE information field in message 3.

In some embodiments, the information field in message 3 configured to carry the additional indication information is predefined by the protocol; or, it is configured by the network device for the first type terminal. For example, the MAC CE information field in message 3 configured to carry the additional indication information is predefined by the protocol; or, it is configured by the network device for the first type terminal.

For example, the network device reads the second LCID from the LCID information field in message 3, and reads the additional indication information from the MAC CE information field in message 3; and then determines that the terminal is an eRedCap UE based on the second LCID and the additional indication information.

In some embodiments, when the second LCID is carried in message 3 and no additional indication information is carried, the network device determines that the terminal is the second type terminal.

In summary, in the message receiving method provided in this embodiment, the first type terminal and the second type terminal share the second LCID. The first type terminal is indicated by a combination of the second LCID and the additional indication information, or the first type terminal is indicated by the additional indication information, and the first type terminal is supported to report the terminal type when the first LCID cannot be used. In this embodiment, additional indication information is carried by message 3, and when the information field of additional indication information exists in message 3, the first type terminal is supported to report the terminal type without the need to report the terminal type through other signaling, which can save signaling overhead.

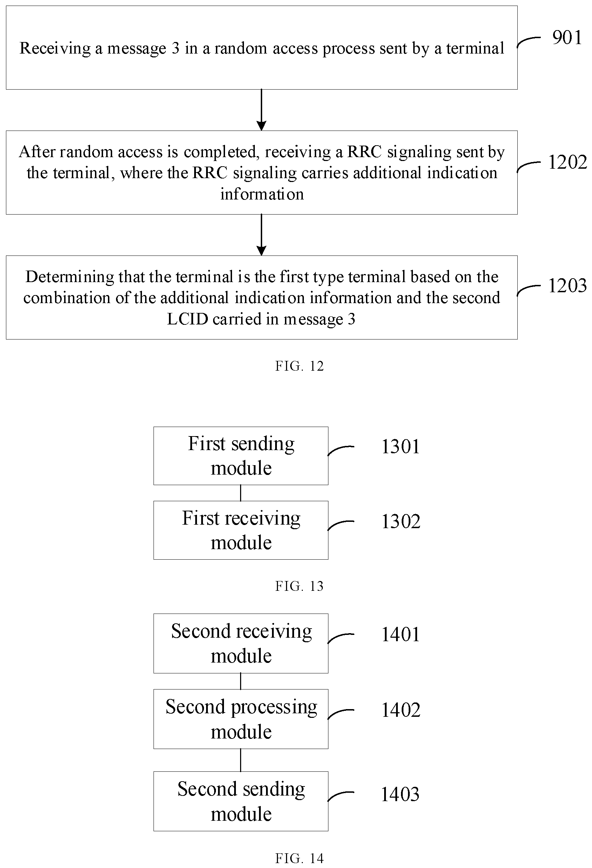

There is also a situation where the network device does not configure the first LCID of the first type terminal, and there is no information field carrying additional indication information in message 3, then step 902 in FIG. 9 may include steps 1202 to 1203, as shown in FIG. 12, the steps are as follows:
Step 1202, after random access is completed, receiving a RRC signaling sent by the terminal, where the RRC signaling carries additional indication information.

In some embodiments, the additional indication information may be predefined by the protocol; or, the additional indication information may be configured by the network device for the first type terminal.

In response to the absence of the information field of additional indication information in message 3, the first type terminal receives the RRC signaling sent by the terminal after random access is completed.

That is, when there is no information field of additional indication information in message 3, the network device will receive message 3 carrying the second LCID; and after completing random access, it will also receive the RRC signaling carrying the additional indication information.

Step 1203, determining that the terminal is the first type terminal based on the combination of the additional indication information and the second LCID carried in message 3.

The second LCID is an LCID shared by the first type terminal and the second type terminal. In some embodiments, the second LCID may be predefined by the protocol; or, the second LCID may be configured by the network device for the first type terminal and the second type terminal. In some embodiments, the second LCID is carried in the LCID information field of message 3; and the network device reads the second LCID from the LCID information field.

For example, the combination of the additional indication information and the second LCID is configured to indicate the first type terminal. For example, the combination of the additional indication information and the second LCID is configured to indicate the eRedCap UE.

In some embodiments, the additional indication information is configured to indicate the first type terminal; then the network device can also determine that the terminal is the first type terminal based on the additional indication information. For example, the additional indication information is configured to indicate the eRedCap UE.

In summary, in the message receiving method provided in this embodiment, the first type terminal and the second type terminal share the second LCID, the first type terminal is indicated by a combination of the second LCID and additional indication information, or the first type terminal is indicated by additional indication information, and the first type terminal is supported to report the terminal type when the first LCID cannot be used. In addition, in this embodiment, RRC signaling is used to send additional indication information, and the first type terminal is supported to report the terminal type when there is no information field of additional indication information in message 3.

For example, the first type terminal is defined as the eRedCap UE in the 5G NR system, the second type terminal is defined as the RedCap UE in the 5G NR system, and the third type terminal is defined as the normal terminal in the 5G NR system.

The reporting of the terminal type by the eRedCap UE may include the following two methods:

### Method 1:

The eRedCap UE uses the first LCID to indicate the terminal type in message 3 during the random access process, and the first LCID is different from the second LCID of the RedCap UE and the third LCID of the normal terminal.

In one case, the eRedCap UE always uses the first LCID to indicate the terminal type.

In another case, the eRedCap UE can determine whether to use the first LCID according to the configuration of the network device. In the case where the network device does not configure the first LCID for the eRedCap UE, the eRedCap UE uses the second LCID and additional indication information to indicate the terminal type. The second LCID is the LCID shared by the eRedCap UE and the RedCap UE. First, the eRedCap UE uses the second LCID in message 3; after completing the random access, the eRedCap UE sends additional indication information through RRC, and indicates the eRedCap UE through the second LCID and the additional indication information, or indicates the eRedCap UE through the additional indication information.

### Mode 2:

The eRedCap UE uses the second LCID and additional indication information to indicate the terminal type in message 3 during the random access process, where the second LCID is the LCID shared by the eRedCap UE and the RedCap UE.

For example, the eRedCap UE uses the MAC CE information field other than the information field where the second LCID is located to carry the additional indication information.

In one case, the eRedCap UE always uses the MAC CE information field to carry the additional indication information.

In another case, the eRedCap UE can determine whether to use the MAC CE information field to carry additional indication information according to the configuration of the network device. When the network device does not configure an information field for carrying additional indication information, the eRedCap UE uses the second LCID in message 3; after completing random access, the eRedCap UE sends additional indication information through RRC, and indicates the eRedCap UE through the second LCID and the additional indication information, or indicates the eRedCap UE through the additional indication information.

In summary, in the message sending method provided in this embodiment, the eRedCap UE can be indicated through the first LCID, or the second LCID and the additional indication information, and the eRedCap UE is supported to report the terminal type.

FIG. 13 shows a block diagram of a message sending device provided by an embodiment of the present disclosure, which can be implemented as part or all of a terminal through software, hardware, or a combination of both. The device includes:
A first sending module 1301 configured to send a message 3 in a random access process to a network device, where the message 3 carries type information for indicating a first type terminal;
where the type information of the first type terminal is different from the type information of the second type terminal and the type information of the third type terminal, and the terminal capability of the second type terminal and the terminal capability of the third type terminal are both greater than the terminal capability of the first type terminal.

In some embodiments, the type information of the first type terminal includes a first LCID;
where the first LCID of the first type terminal is different from the second LCID of the second type terminal and the third LCID of the third type terminal.

In some embodiments, the first LCID is carried in the LCID information field of the message 3.

In some embodiments, the first LCID is configured to indicate an eRedCap UE, the second LCID is configured to indicate a RedCap UE, and the third LCID is configured to indicate a normal UE.

In some embodiments, the first LCID is type information configured by the network device for the first type terminal; or, the first LCID is type information of the first type terminal predefined by the protocol.

In some embodiments, the device further includes:
a first receiving module 502 configured to receive a system message sent by the network device before sending message 3 in the random access process to the network device, where the system message carries the first LCID.

In some embodiments, the type information of the first type terminal includes a second LCID and additional indication information;
where the second LCID is an LCID shared by the first type terminal and the second type terminal; the combination of the additional indication information and the second LCID is configured to indicate the first type terminal, or the additional indication information is configured to indicate the first type terminal.

In some embodiments, the second LCID is carried in the LCID information field of the message 3, and the additional indication information is carried in the information field of the message 3 other than the LCID information field.

In some embodiments, the additional indication information is carried in the MAC CE information field in the message 3.

In some embodiments, the type information of the first type terminal includes a second LCID; the second LCID is a LCID shared by the first type terminal and the second type terminal.

The first sending module 1301 is configured to send a RRC signaling to the network device after random access is completed, where the RRC signaling carries additional indication information;
where the combination of the additional indication information and the second LCID is configured to indicate the first type terminal, or the additional indication information is configured to indicate the first type terminal.

FIG. 14 shows a block diagram of a message receiving device provided by an embodiment of the present disclosure, which can be implemented as a part or all of a network device through software, hardware, or a combination of both, and the device includes:
a second receiving module 1401 configured to receive message 3 in the random access process sent by the terminal;
a second processing module 1402 configured to determine that the terminal is a first type terminal based on type information of the first type terminal carried by the message 3;
where the type information of the first type terminal is different from the type information of the second type terminal and the type information of the third type terminal, and the terminal capability of the second type terminal and the terminal capability of the third type terminal are both greater than the terminal capability of the first type terminal.

In some embodiments, the type information of the first type terminal includes a first LCID;
where the first LCID of the first type terminal is different from the second LCID of the second type terminal and the third LCID of the third type terminal.

In some embodiments, the first LCID is carried in the LCID information field of the message 3.

In some embodiments, the first LCID is configured to indicate an eRedCap UE, the second LCID is configured to indicate a RedCap UE, and the third LCID is configured to indicate a normal UE.

In some embodiments, the first LCID is the type information of the first type terminal predefined by the protocol.

In some embodiments, the device includes:
a second sending module 1403 configured to send the first LCID to the first type terminal.

In some embodiments, the second sending module 1403 is configured to send a system message to the first type terminal, where the system message carries the first LCID.

In some embodiments, the type information of the first type terminal includes a second LCID and additional indication information;
where the second LCID is a LCID shared by the first type terminal and the second type terminal; the combination of the additional indication information and the second LCID is configured to indicate the first type terminal, or the additional indication information is configured to indicate the first type terminal.

In some embodiments, the second LCID is carried in the LCID information field of the message 3, and the additional indication information is carried in the information field of the message 3 other than the LCID information field.

In some embodiments, the additional indication information is carried in the MAC CE information field in the message 3.

In some embodiments, the type information of the first type terminal includes a second LCID; and the second LCID is the LCID shared by the first type terminal and the second type terminal.

The second receiving module 1401 is configured to receive a RRC signaling sent by the terminal after the random access is completed, where the RRC signaling carries the additional indication information;
The second processing module 1402 is configured to determine that the terminal is the first type terminal based on the combination of the additional indication information and the second LCID.

In some embodiments, the type information of the first type terminal includes a second LCID; and the second LCID is the LCID shared by the first type terminal and the second type terminal.

The second receiving module 1401 is configured to receive a RRC signaling sent by the terminal after the random access is completed, where the RRC signaling carries the additional indication information.

The second processing module 1402 is configured to determine that the terminal is the first type terminal based on the additional indication information.

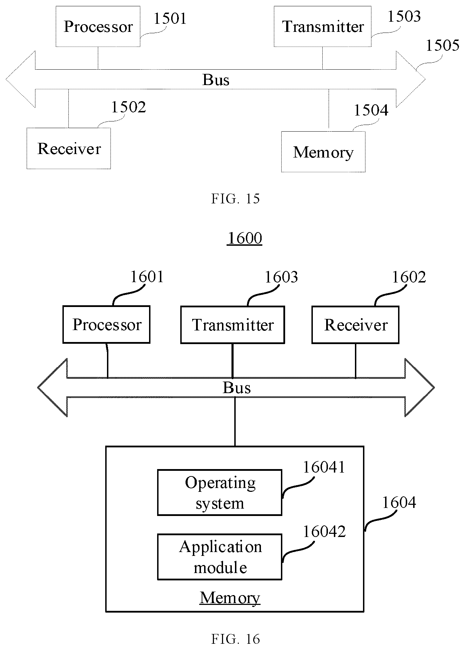

FIG. 15 shows a schematic diagram of a structure of a UE provided by an embodiment of the present disclosure, and the UE includes a processor 1501, a receiver 1502, a transmitter 1503, a memory 1504 and a bus 1505.

The processor 1501 includes one or more processing cores, and the processor 1501 executes various functional applications and information processing by running software programs and modules.

The receiver 1502 and the transmitter 1503 can be implemented as a communication component, and the communication component can be a communication chip.

The memory 1504 is connected to the processor 1501 via the bus 1505.

The memory 1504 can be configured to store at least one instruction, and the processor 1501 is configured to execute the at least one instruction to implement each step in the above method embodiment.

In addition, the memory 1504 can be implemented by any type of volatile or non-volatile storage device or a combination thereof, and the volatile or non-volatile storage device includes but is not limited to: a magnetic disk or optical disk, an electrically erasable programmable read-only memory (EEPROM), an erasable programmable read-only memory (EPROM), a static random-access memory (SRAM), a read-only memory (ROM), a magnetic memory, a flash memory, and a programmable read-only memory (PROM).

In an example embodiment, a non-transitory computer-readable storage medium including instructions is also provided, such as a memory including instructions, and the instructions can be executed by a processor of the UE to complete the above-mentioned message sending method. For example, the non-transitory computer-readable storage medium can be a ROM, a random-access memory (RAM), a compact disc read-only memory (CD-ROM), a magnetic tape, a floppy disk, and an optical data storage device, etc.

A non-transitory computer-readable storage medium, when the instructions in the non-transitory computer storage medium are executed by the processor of the UE, enables the UE to execute the above-mentioned message sending method.

FIG. 16 is a block diagram of a network device 1600 according to an embodiment. The network device 1600 may be a base station.

The network device 1600 may include: a processor 1601, a receiver 1602, a transmitter 1603 and a memory 1604. The receiver 1602, the transmitter 1603 and the memory 1604 are respectively connected to the processor 1601 through a bus.

Among them, the processor 1601 includes one or more processing cores, and the processor 1601 performs the message receiving method provided by the embodiment of the present disclosure by running software programs and modules. The memory 1604 can be configured to store software programs and modules. Specifically, the memory 1604 can store an operating system 16041 and an application module 16042 required for at least one function. The receiver 1602 is configured to receive communication data sent by other devices, and the transmitter 1603 is configured to send communication data to other devices.

An example embodiment of the present disclosure also provides a computer-readable storage medium, in which at least one instruction, at least one program, code set or instruction set is stored, and the at least one instruction, at least one program, code set or instruction set is loaded and executed by the processor to implement the message sending method or message receiving method provided by the above-mentioned various method embodiments.

An example embodiment of the present disclosure also provides a computer program product, which includes computer instructions, and the computer instructions are stored in a computer-readable storage medium. The processor of the computer device reads the computer instructions from the computer-readable storage medium, and the processor executes the computer instructions, so that the computer device performs the message sending method or message receiving method provided by the above-mentioned various method embodiments.

It should be understood that the "multiple" mentioned in this article refers to two or more. "And/or" describes the association relationship of associated objects, indicating that there can be three relationships. For example, A and/or B can represent: A exists alone, A and B exist at the same time, and B exists alone. The character "/" generally indicates that the previous and next associated objects are in an "or" relationship.

It is further understood that the terms "first", "second", etc. are used to describe various information, but such information should not be limited to these terms. These terms are only used to distinguish the same type of information from each other, and do not indicate a specific order or degree of importance. In fact, the expressions "first", "second", etc. can be used interchangeably. For example, without departing from the scope of the present disclosure, the first message frame can also be referred to as the second message frame, and similarly, the second message frame can also be referred to as the first message frame.

It is further understood that although the operations are described in a specific order in the drawings in the embodiments of the present disclosure, it should not be understood as requiring the operations to be performed in the specific order shown or in a serial order, or requiring the execution of all the operations shown.

After considering the specification and practicing the present disclosure, it will be easy for those skilled in the art to think of other embodiments of the present disclosure. The present disclosure is intended to cover any variation, use or adaptation of the present disclosure, which follows the general principles of the present disclosure and includes common knowledge or conventional technical means in the technical field not disclosed in the present disclosure. The description and embodiments are to be regarded as examples only, and the true scope and spirit of the present disclosure are indicated by the following claims.

It should be understood that the present disclosure is not limited to the exact structures that have been described above and shown in the drawings, and that various modifications and changes may be made without departing from the scope thereof. The scope of the present disclosure is limited only by the appended claims.

## Claims

1. A message sending method, performed by a first type terminal, comprising:
sending a message 3 in a random access process to a network device, the message 3 carrying type information for indicating the first type terminal;
wherein the type information of the first type terminal is different from type information of a second type terminal and type information of a third type terminal, and a terminal capability of the second type terminal and a terminal capability of the third type terminal are both greater than a terminal capability of the first type terminal.

2. The method according to claim 1, wherein the type information of the first type terminal comprises a first logical channel identifier LCID;
wherein the first LCID of the first type terminal is different from a second LCID of the second type terminal and a third LCID of the third type terminal.

3. The method according to claim 2, wherein the first LCID is carried in a LCID information field of the message 3.

4. The method according to claim 2, wherein the first LCID is configured to indicate an enhanced reduced capability terminal eRedCap UE, the second LCID is configured to indicate a reduced capability terminal RedCap UE, and the third LCID is configured to indicate a normal UE.

5. The method according to any one of claims 2 to 4, wherein
the first LCID is the type information configured by the network device for the first type terminal; or,
the first LCID is the type information of the first type terminal predefined by a protocol.

6. The method according to claim 5, wherein before sending the message 3 in the random access process to the network device, the method comprises:
receiving a system message sent by the network device, the system message carrying the first LCID.

7. The method according to claim 1, wherein the type information of the first type terminal comprises a second LCID and additional indication information;
wherein the second LCID is an LCID shared by the first type terminal and the second type terminal; a combination of the additional indication information and the second LCID is configured to indicate the first type terminal, or the additional indication information is configured to indicate the first type terminal.

8. The method according to claim 7, wherein the second LCID is carried in an LCID information field of the message 3, and the additional indication information is carried in an information field of the message 3 other than the LCID information field.

9. The method according to claim 8, wherein the additional indication information is carried in a media access control control element MAC CE information field in the message 3.

10. The method according to claim 1, wherein the type information of the first type terminal comprises a second LCID; the second LCID is an LCID shared by the first type terminal and the second type terminal;
the method further comprises:
after the random access is completed, sending a radio resource control RRC signaling to the network device, the RRC signaling carrying additional indication information;
wherein a combination of the additional indication information and the second LCID is configured to indicate the first type terminal, or the additional indication information is configured to indicate the first type terminal.

11. A message receiving method, performed by a network device, comprising:
Receiving a message 3 in a random access process sent by a terminal; and
determining that the terminal is a first type terminal based on type information of the first type terminal carried in the message 3;
wherein the type information of the first type terminal is different from type information of a second type terminal and type information of a third type terminal, and a terminal capability of the second type terminal and a terminal capability of the third type terminal are both greater than a terminal capability of the first type terminal.

12. The method according to claim 11, wherein the type information of the first type terminal comprises a first LCID;
wherein the first LCID of the first type terminal is different from a second LCID of the second type terminal and a third LCID of the third type terminal.

13. The method according to claim 12, wherein the first LCID is carried in an LCID information field of the message 3.

14. The method according to claim 12, wherein the first LCID is configured to indicate an eRedCap UE, the second LCID is configured to indicate a RedCap UE, and the third LCID is configured to indicate a normal UE.

15. The method according to any one of claims 12 to 14, wherein the first LCID is the type information of the first type terminal predefined by a protocol.

16. The method according to any one of claims 12 to 14, further comprising:
sending the first LCID to the first type terminal.

17. The method according to claim 16, wherein sending the first LCID to the first type terminal comprises:
sending a system message to the first type terminal, the system message carrying the first LCID.

18. The method according to claim 11, wherein the type information of the first type terminal comprises a second LCID and additional indication information;
wherein the second LCID is an LCID shared by the first type terminal and the second type terminal; a combination of the additional indication information and the second LCID is configured to indicate the first type terminal, or the additional indication information is configured to indicate the first type terminal.

19. The method according to claim 18, wherein the second LCID is carried in an LCID information field of the message 3, and the additional indication information is carried in an information field of the message 3 other than the LCID information field.

20. The method according to claim 19, wherein the additional indication information is carried in a MAC CE information field in the message 3.

21. The method according to claim 11, wherein the type information of the first type terminal comprises a second LCID; the second LCID is an LCID shared by the first type terminal and the second type terminal;
the method further comprises:
after the random access is completed, receiving a RRC signaling sent by the terminal, the RRC signaling carrying additional indication information; and
determining that the terminal is the first type terminal based on a combination of the additional indication information and the second LCID.

22. The method according to claim 11, wherein the type information of the first type terminal comprises a second LCID; the second LCID is a LCID shared by the first type terminal and the second type terminal;
the method further comprises:
after the random access is completed, receiving a RRC signaling sent by the terminal, the RRC signaling carrying additional indication information; and
determining that the terminal is the first type terminal based on the additional indication information.

23. A message sending device, comprising:
a first sending module configured to send a message 3 in a random access process to a network device, the message 3 carrying type information for indicating a first type terminal;
wherein type information of the first type terminal is different from type information of a second type terminal and type information of a third type terminal, and a terminal capability of the second type terminal and a terminal capability of the third type terminal are both greater than a terminal capability of the first type terminal.

24. A message receiving device, comprising:
a second receiving module configured to receive a message 3 in a random access process sent by a terminal;
a second processing module configured to determine that the terminal is a first type terminal based on type information of the first type terminal carried in the message 3;
wherein the type information of the first type terminal is different from type information of a second type terminal and type information of a third type terminal, and a terminal capability of the second type terminal and a terminal capability of the third type terminal are both greater than a terminal capability of the first type terminal.

25. A terminal, comprising:
a processor; and
a transceiver connected to the processor;
wherein the processor is configured to execute executable instructions to implement the message sending method according to any one of claims 1 to 10.

26. A network device, comprising:
a processor; and
a transceiver connected to the processor;
wherein the processor is configured to execute executable instructions to implement the message receiving method according to any one of claims 11 to 22.

27. A computer-readable storage medium, wherein the computer-readable storage medium stores at least one instruction, at least one program, a code set or an instruction set, and the at least one instruction, the at least one program, the code set or the instruction set are loaded and executed by a processor to implement the message sending method according to any one of claims 1 to 10, or the message receiving method according to any one of claims 11 to 22.
